# EUROPEAN PATENT APPLICATION

(11) **EP 4 375 642 A1**
(43) Date of publication of application: **29.05.2024**
(21) Application number: 22209834.5
(22) Date of filing: 28.11.2022
(51) Int. Cl.: G01N 21/17, G01N 21/47

(54) **METHOD AND SYSTEM FOR IMAGING SUBSURFACE FEATURES INSIDE A SUBSTRATE**

(71) Applicant: Nederlandse Organisatie voor toegepast-natuurwetenschappelijk Onderzoek TNO, 2595 DA 's-Gravenhage (NL)
(72) Inventor: VAN NEER, Paul Louis Maria Joseph, 2595 DA 's-Gravenhage (NL); BÄUMER, Stefan Michael Bruno, 2595 DA 's-Gravenhage (NL)
(74) Representative: V.O.

(57) **Abstract**

A method and system for imaging subsurface features (Sf) below a surface (Ss) of a substrate (S). Acoustic waves (W) are generated and scattered from the subsurface features (Sf) inside the substrate (S). A beam of probe light (Lpr) interacts with a probe region (Spr) of the substrate (S) traversed by the acoustic waves (W) scattering from the subsurface features (Sf). The subsurface features (Sf) are imaged based on a modulation of the probe light (Lpr) caused by the interaction with the acoustic waves (W) in the probe region (Spr). The probe light (Lpr) is focused onto the substrate (S) via a microlens (11) generating a photonic jet (Lj) with a focal region coinciding with the probe region (Spr). This may photonic jet (Lj) may provide a relatively small focus thereby improving lateral resolution for measuring the subsurface features (Sf) via acoustic waves (W).

## Description

### TECHNICAL FIELD AND BACKGROUND

The present disclosure relates to a method and system for imaging subsurface features inside a substrate.

High resolution imaging of a substrate is needed for various applications such as metrology in the semiconductor industry or in the medical industry. Superficial features on the surface of a substrate can be detected, measured or imaged using various optical techniques. Here, the contrast is typically based on refractive index differences in the sample, and the resolution typically depends the numerical aperture of the optical system and the wavelength used. Using standard microscopy, the far-field resolution is typically limited by the diffraction of optical waves. Various "super-resolution" techniques exist for optically imaging a substrate beyond this limit. For example, Lecler et al., describe a "Photonic jet lens" [Sci Rep 9, 4725 (2019); DOI: 10.1038/s41598-019-41193-2]. The known technique, based on microsphere-assisted microscopy, enables the lateral resolution of optical microscopes to reach around λ/5 through a full-field and a far-field acquisition. Unfortunately, optical techniques are generally unsuitable to image subsurface features in an optically opaque material.

Subsurface features can also be detected, measured or imaged using acoustic techniques. Here, the contrast is typically based on the acoustic impedance differences in the sample and therefore acoustic methods are not limited by the presence of optically opaque materials. In such methods an acoustic or elastodynamic wave is launched into or created in the sample. The wave is reflected, diffracted or scattered by the structures in the sample. The reflected, diffracted or scattered field is then received and subsequently interpreted. In semiconductor applications the feature sizes range from nm to pm, implying that acoustic frequencies in the range of 1 - 100+ GHz are necessary.

Conventionally, acoustic waves are generated and/or measured using ultrasound transducers often based on the piezoelectric effect. The achievable lateral resolution depends on the aperture size of the transducer and the frequency of the acoustic waves. To maximize the axial resolution it is desired to maximize the frequency bandwidth of an acoustic system. In the case of short pulse excitation that implies minimizing the pulse length. The generated ultrasonic waves are typically detected by ultrasonic transducers and then analyzed to produce images. Unfortunately, the lateral resolution of acoustic techniques are generally limited by the size of the transducing elements. Alternatively, or additionally, acoustic waves may be created in a medium using optical generation mechanisms. For example, photoacoustic imaging or optoacoustic imaging is an imaging modality based on the photoacoustic effect. Here, laser pulses are delivered into a material volume using a pump beam and part of the optical energy is absorbed by the material, heating up said material, leading to transient thermoelastic expansion and the creation of a propagating acoustic or elastic wave. A characteristic of said acoustic wave generation mechanism is that the resulting acoustic pulses are typically short and thus feature a wide frequency band compared to other ultrasonic generation mechanisms (e.g. compared to piezoelectric transducers). For example, Slayton and Nelson [J Chem Phys. 2004 Feb 22;120(8):3908-18. doi: 10.1063/1.1643722] describe a technique wherein impulsive stimulated thermal scattering is extended to backside measurement of acoustic wave packets that have propagated through thin metal films following their generation by pulsed optical excitation, heating, and thermal expansion at the front side. As another example, Van Neer *et al.* describe a Feasibility study of photo thermal acoustic imaging of buried nanowires in Gate-All-Around Nanowire FETs.

As further background, Van Neer et al. describe 'Feasibility of 4 GHz half wavelength contact acoustic microscopy (HaWaCAM) [Proc. IEEE Ultrasonics Symp., Xi'an, China, 2021]. Typically, an acoustic microscope is based on a single element transducer operating in pulse-echo mode. The acoustic waves are coupled into a sample using a liquid couplant (e.g. water) and the beam is focused using a geometric lens to obtain a good lateral resolution. The curved lens shape combined with piezo radii >0.1 mm lead to coupling layer thicknesses of >10 µm. Thus, the acoustic frequency is limited (typically up to a few GHz) by the attenuation in the coupling layer (water: -3.5 dB/µm at 4 GHz) and the typically low transmission coefficients at the transducer-liquid couplant and liquid-sample interfaces. Hence, conventional acoustic microscopy is limited in frequency and resolution, and requires a liquid contact medium between transducer and sample.

Acoustic scanning probe microscopy methods, such as ultrasonic atomic force microscopy (UAFM), form a class of imaging and research methods that allows the accurate imaging of sub-surface features in a sample. For example, WO 2020/236002 A1 describes how acoustic waves are generated in an AFM probe using a modulated laser source. The modulated laser source provides an intensity varied laser beam which causes a variable amount of heat to be provided to the probe tip, resulting in acoustic vibrations inside the probe tip. Although 1-100+ GHz acoustic frequencies and lateral and axial resolutions of order 10 - 1000s nm may be possible using such techniques, these may be limited by the contact-based nature of AFM (potentially leading to tip-wear, fouling etc).

There remains a need for a high-resolution subsurface imaging technique that alleviates at least some problems of the prior art.

### SUMMARY

Without being bound by theory, it will be appreciated that for piezo transducers, the axial resolution is typically limited by the acoustic frequency that can be excited (which is in practice may be limited by the roughness of the piezo layers) and/or limited in lateral resolution by the combination of focus and acoustic frequency (acoustic wavelength). For unfocused piezo transducers the lateral resolution at focus is limited by the lateral width of the transducer and the frequency. In principle optical wave generation methods may provide very high frequencies (e.g. more than 100 GHz), leading to very high acoustic axial resolutions (e.g. between 10 to 100 nm) due to the low acoustic wavelength. However, the inventors have realized that the lateral resolution does not scale with the acoustic wavelength, because this resolution may be limited by the optical beam width of the pump and probe beams (which is typically about 1 micron minimum). So the possibility of going to very high acoustic frequencies with the opto-acoustic methods does not necessarily improve the resolution. Aspects of the present disclosure are thus aimed at alleviating these and other issues allowing the resolution in both axial and lateral directions to scale with the acoustic wavelength and therefore reach high resolutions, e.g. between 10 to 100 nm.

In accordance with these and other aspects the present disclosure provides a method and system for imaging subsurface features below a surface of a substrate. Acoustic waves are generated which scatter from the subsurface features inside the substrate. A beam of probe light interacts with a probe region of the substrate traversed by the acoustic waves scattering from the subsurface features. The subsurface features are imaged based on a modulation of the probe light caused by the interaction with the acoustic waves in the probe region. The inventors find that lateral resolution can be significantly improved by focusing the probe light onto the substrate via a microlens generating a photonic jet with a focal region coinciding with the probe region.

The method can be performed contactlessly by holding and/or scanning the microlens a small distance above the surface of the substrate. By generating the acoustic waves using pump light focused onto the substrate, preferably via the same microlens, the point of origin for the acoustic waves may be accurately determined. By using a spheroidal microlens, focal characteristics may be optimized. By using different wavelengths for the pump and probe light, each can be optimized to cause respective absorption and reflection, possibly at different depths of the substrate. By using pump and probe pulses with different delays further information may be extracted.

### BRIEF DESCRIPTION OF DRAWINGS

These and other features, aspects, and advantages of the apparatus, systems and methods of the present disclosure will become better understood from the following description, appended claims, and accompanying drawing wherein:
FIG 1A illustrates a beam of probe light interacting with a substrate;
FIG 1B illustrates a beam of pump light interacting with a substrate;
FIG 2 illustrates details of a microlens generating a photonic jet;
FIGs 3A-3F illustrate various probe heads configured to hold and/or illuminate a microlens;
FIG 4 illustrates further components of a system for imaging subsurface features;
FIG 5A illustrates a system comprising separate pump and probe heads;
FIG 5B illustrates a system wherein a regular focused light beam is used to generate acoustic waves;
FIG 6A illustrates further details of a system to generate and measure light interacting with a substrate.
FIG 6B illustrates example results.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

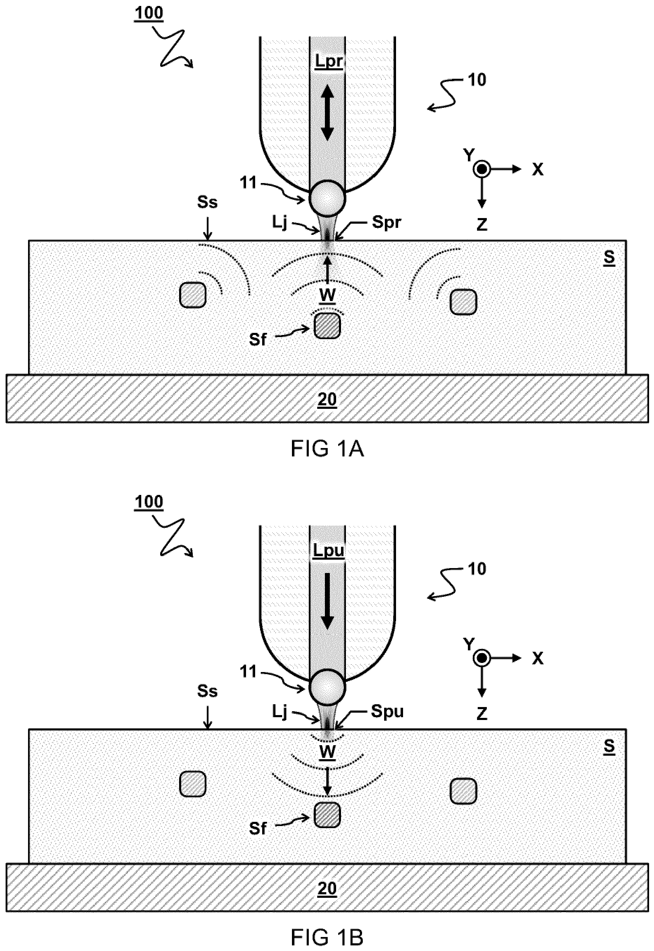

FIG 1A illustrates a beam of probe light Lpr interacting with a substrate S. Some embodiments comprise imaging subsurface features Sf below a surface Ss of a substrate S. One embodiment comprises generating acoustic waves W scattering from the subsurface features Sf inside the substrate S. Another or further embodiment comprises providing a beam of probe light Lpr interacting with a probe region Spr of the substrate S traversed by the acoustic waves W scattering from the subsurface features Sf. Another or further embodiment comprises imaging the subsurface features Sf based on a change of the probe light Lpr caused by the interaction with the acoustic waves W in the probe region Spr. For example, the change may include modulation Lm of the probe light Lpr caused by the interaction with the acoustic waves W in the probe region Spr, or any other change. In a preferred embodiment, the probe light Lpr is focused onto the substrate S via a microlens 11. More preferably, the microlens is configured to generate a photonic jet Lj. Most preferably, the photonic jet Lj has a focal region coinciding with the probe region Spr. For example, the photonic jet is focused at the surface Ss of the substrate S.

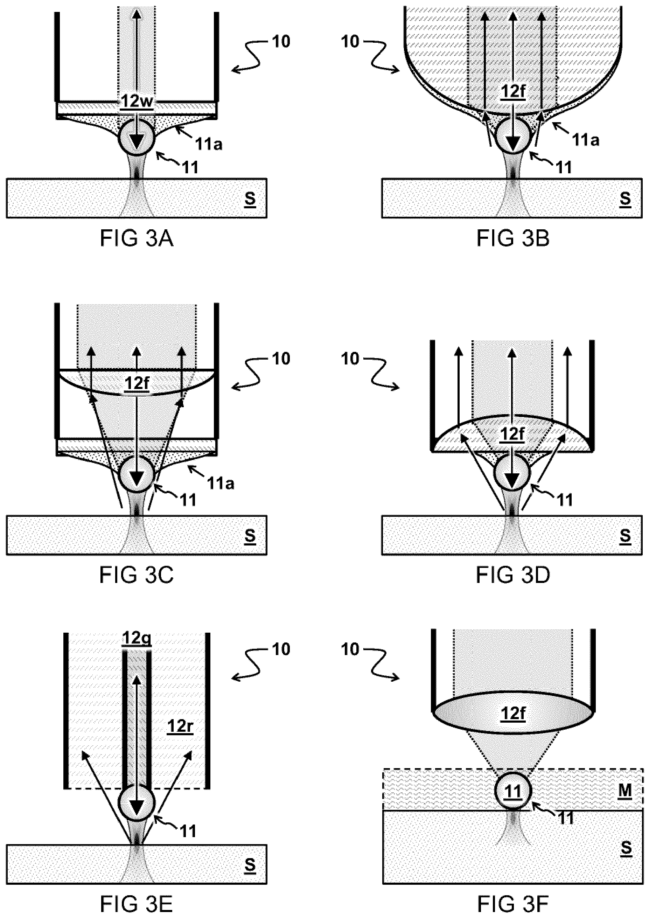

In some embodiments, the microlens 11 is held at a distance above the surface Ss of the substrate S. In other embodiments (not shown here), the microlens 11 may be disposed on the surface Ss. In the embodiment shown, the microlens 11 is held by a probe head 10. In another or further embodiment, the substrate S is held by a substrate stage 20. Preferably, the probe head 10 and/or substrate stage 20 are configured to control a relative position X,Y,Z of the microlens 11 and/or focal region with respect to a position of the surface Ss of the substrate S. For example, the probe head 10 is configured to scan in one or more directions X,Y along the surface Ss and/or change the distance Z with respect to the surface Ss. In some embodiments, the beam of probe light Lpr is at least partially reflected from the probe region Spr back through the microlens 11. This can provide relatively compact arrangement. Alternatively, or additionally, the probe light can be received and measured via separate or shared optical components. Various examples are shown in FIGs 3A - 3F.

To achieve high resolution imaging, the acoustic waves W preferably have a relatively high frequency, e.g. ≥1 GHz, ≥10 GHz, ≥100 GHz, up to 1 THz, or more. For example, using acoustic waves with frequencies up to 100 GHz, an axial resolution between 50 and 100 nm can be achieved. In some embodiments, the modulation of the probe light Lpr comprises modulation of a phase of the probe light Lpr. This can provide a relatively sensitive modality for measuring the acoustic waves. For example, the modulation of the probe light Lpr is measured interferometrically. Alternatively, or additionally, also other modulations of the light can be envisaged such as modulation of the amplitude, frequency, or polarization. Also other optical read-out mechanisms can be envisaged. Preferably, the probe light Lpr is provided as pulsed light. For example, the light pulses are generated by a laser. Alternatively, a continuous light source could be used, e.g. while measuring modulation of the continuous light in the form of phase shifts, et cetera.

FIG 1B illustrates a beam of pump light Lpu interacting with a substrate S. In some embodiments, the acoustic waves W are generated by a beam of pump light Lpu interacting with a pump region Spu of the substrate S. For example, the interaction comprises at least partial absorption of the pump light Lpu. This may cause local (thermal) expansion causing generation of acoustic waves penetrating into the substrate. To improve resolution, the pump light Lpu is preferably delivered as a relatively short pulse, e.g. having a pulse length (FWHM) less than one microsecond, preferably less than one nanosecond, e.g. hundred femtosecond, or less. The pump light pulse preferably has sufficiently high energy to generate the acoustic waves; and sufficiently low energy to avoid damaging the substrate. For example, the pump pulse energy per irradiated area is between 0.1 and 10 mJ/cm², preferably between 0.5 and 5 mJ/cm², more preferably between 1 and 2 mJ/cm². Typically, the probe light Lpr may be less intense than the pump light Lpu, e.g. having pulse energy that is lower by at least a factor two, three, five, ten, or more.

In a preferred embodiment, the pump light Lpu is focused onto the substrate S via a microlens 11 generating a photonic jet Lj with a focal region determining the pump region Spu. Most preferably, the pump light Lpu is focused onto the substrate S via the same microlens 11 as the probe light Lpr. In other or further embodiments (not shown), the acoustic waves W are generated by another type of acoustic transducer, e.g. electro-acoustic transducer (such as a piezoelectric element) contacting the substrate S. In one embodiment, the acoustic transducer contacts the substrate S via an AFM tip, e.g. placed on the surface Ss adjacent the photonic jet Lj. In another or further embodiment, one or more acoustic transducers contact the substrate S directly or via a transducing medium. For example, one or more acoustic transducers can be arranged on the surface Ss on top of the substrate S, on a side of the substrate and/or on a bottom of the substrate S.

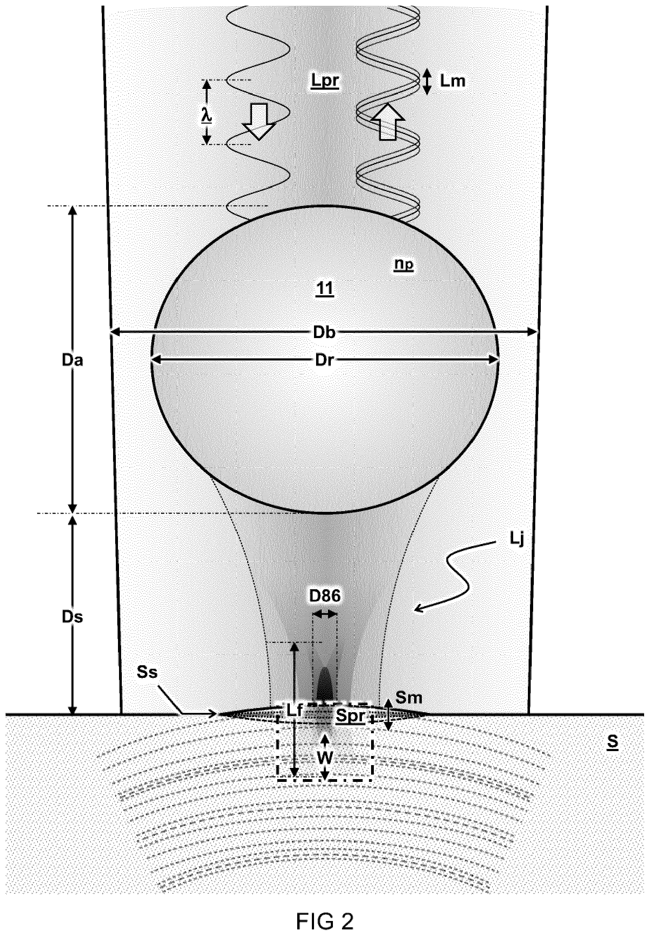

FIG 2 illustrates further details of the microlens 11 and photonic jet Lj. Without being bound by theory, the aforementioned article by Lecler et al. (Sci Rep 9, 4725 2019; DOI:10.1038/s41598-019-41193-2) explains that a focusing phenomenon can occur in the near field of a microscopic particle acting as a microlens, wherein light is concentrated in a sub-diffraction-limit progressive beam known as a "photonic jet". This phenomenon need not be limited to particles which are strictly spherical. Indeed the article demonstrates that also a square glass particle interacting with a plane incident wave may be able to generate a photonic jet. At small scale (on the order of the wavelength of the light), propagation of light need not strictly obey the classical laws of geometrical optics. In particular, the focusing effect may occur not only due to refraction of light by the particle but also due to diffraction.

In a preferred embodiment, the microlens 11 is round, more preferably spheroidal (e.g. prolate, oblate, spherical), most preferably completely spherical (constant radius and/or the same diameter in all directions). Using a more rounded microlens 11 may help to improve a profile of the focal spot. For example, it is preferred to concentrate a majority of the power at the center while minimizing off-center diffraction rings or spots. Alternatively, or additionally, also other shapes may be used, e.g. a cylinder, pyramid, or cube having the same or similar maximum radial and/or axial diameters (Dr,Da) as described herein.

As described herein, the microlens 11 is configured to focus a light beam at a focal region Lf. The focal region will be understood as a region where the beam width is relatively narrow, typically around its focus (waist) where the width of the beam is narrowest. For a Gaussian beam profile the width of the beam is typically defined as (twice) the radius of the beam where the relative intensity (irradiance) is 1/e² (13.5%) of its maximum value. More generally, the width of a beam at any axial position along the optical axis of the beam can be defined as the diameter of a (circular) region encompassing a certain percentage of the beam's power or irradiance. For example, the D86 width is defined as the diameter of the circle that is centered at the centroid of the beam profile and contains 86% of the beam power. This percentage corresponds to the relative amount of power contained in a circular Gaussian beam profile integrated down to 1/e² of its maximum value - which may corresponds to the conventionally defined width of such beam.

Using a normal (macroscopic) lens system, typically the size of the focus is limited by diffraction, e.g. expressed by Abbe's law. Using the microlens described herein, a relatively small focal spot may be obtained, e.g. smaller than the diffraction limit. In some embodiments, the refractive index and (maximum) diameter of the microlens 11 are selected to achieve a focal size D86 width less than the wavelength λ of the respective light used, preferably D86≤λ/2, more preferably D86≤λ/3, more preferably D86≤λ/4, most preferably D86≤λ/5. For example, the focal size D86 is less than one micrometer, preferably less than 500 nm, more preferably less than 200 nm, more preferably less than 100 (e.g. λ/5 using 500 nm light), e.g. down to 50 nm, or less. In some embodiments, the optical jet is configured to optimize the 3D acoustical source volume. In other or further embodiments, the size of the 3D acoustic source induced by the light distribution in the sample is in the order of an acoustical wavelength.

In general, the minimum obtainable size of the focus may be smaller when using smaller wavelength. However, it may be impractical to generate light with very small wavelength and/or such light may damage the substrate, e.g. by ionization of high energy photons. As described herein, preferably a respective wavelength λ of the pump light Lpu and/or probe light Lpr is between 100 nm and 1000 nm, more preferably between 150 nm and 800 nm, most preferably between 200 nm and 400 nm.

In some embodiments, the pump light Lpu has the same wavelength λ as the probe light Lpr. For example, the light is generated by the same light source. In other embodiments, the pump light Lpu has a different wavelength than the probe light Lpr. The light may be generated by different light sources, or the same light source using frequency conversion (e.g. frequency doubling or other mixing). Using different wavelengths may be convenient for filtering out the pump light Lpu in the measurement of the probe light Lpr. The wavelength of the light can also affect the focusing conditions, e.g. position and/or size of the focus. In one embodiment, the probe light Lpr has a relatively small wavelength compared to the pump light Lpu, e.g. smaller by a factor 1.1, 1.5, 2, or more. This may improve lateral resolution in particular of the probe region Spr.

Typically, the microlens 11 comprises, or is (essentially) formed of a dielectric and/or transparent (solid) material, preferably transmitting at least 50% of the light, preferably at least 90%. To provide substantial focusing, including by means of refraction, the microlens 11 preferably has a relative refractive index "np" larger than one (relative to the surrounding medium, e.g. air and/or material in which the microlens 11 is embedded), more preferably between 1.2 and 1.8, most preferably between 1.3 and 1.6. Typically, the higher the refractive index, the smaller the distance Ds between the particle edge and the irradiance peak of the photonic jet. For example, the microlens 11 may be formed of BaTiO3 Glass (BTG), having a refractive index of 1.92, partially or fully embedded in polydimethylsiloxane (PDMS), having a refractive index 1.4, resulting in a relative refractive index 1.92/1.40=1.37. Of course also other materials and/or combinations can be envisaged. It can also be envisaged that one side of the microlens 11 is embedded in a surrounding medium, e.g. used as adhesive material, while the other side is exposed to air. This may result in an effective relative refractive index which may be approximated as an average between the front and back side. Typically, encapsulation of the microlens 11 between 20% - 80% has relatively small effect on the performance.

In other or further embodiments, the microlens 11 has a (maximum and/or constant) cross-section diameter (Da,Dr) on the order of a wavelength of the light (pump and/or probe light, depending where the particle is used for). For example, this diameter (Da and/or Dr) is between one and one hundred times the wavelength λ of the light, preferably between two and fifty times the wavelength λ of the light, more preferably between four and twenty times the wavelength λ of the light, most preferably between six and ten times the wavelength λ of the light. Typically, the larger the particle diameter, the larger the distance Ds. However, when the diameter is too large compared to the wavelength, the diffraction of light, caused by the particle, may be less prominent than the refraction, i.e. the particle may start acting as a normal (ball) lens and create a more regular focused beam instead of a photonic jet, i.e. the focal size may approach the normal diffraction limit.

In some embodiments, the probe light Lpr and pump light Lpu has a beam diameter Db (e.g. D86 or 1/e²) at a position of the microlens 11 which is the same or similar or as the a radial diameter Dr of the microlens 11, e.g. within a factor ten, five, two, or one (i.e. substantially the same). In this way, a significant portion, preferably most, of the available light is used to generate the photonic jet Lj. In one embodiment, the light beam is pre-focused before reaching the microlens 11, e.g. to increase the amount of light impinging the microlens 11. In other or further embodiments, at least the some (or even most) of the light may pass a side of the microlens 11. It may be noted that also light passing adjacent the microlens may contribute in forming the photonic jet Lj by diffraction. In some embodiments, a reflective coating is applied adjacent the microlens 11, e.g. to prevent or alleviate excess light of the pump beam in the adjacent region from reaching the substrate S.

In some embodiments, the wavelength λ of the pump light Lpu and/or probe light Lpr, the refractive index np of the microlens 11 (for the respective light), and the diameter (Da and/or Dr) of the microlens 11 are selected to achieve a focal distance, between a front of the microlens 11 (facing the surface Ss) and an irradiance peak of the photonic jet Lj (where D86 is minimal), of at least one hundred nanometer, preferably at least five hundred nanometer, more preferably at least one micrometer, e.g. up to five micrometer, or more. Having at least some distance between the front of the microlens 11 and the substrate S may help to avoid collision.

In some embodiments, the probe light Lpr is predominantly reflected from the surface Ss of the substrate. For example, more than 90% of the reflected light is received from a region less than a wavelength distance from the surface Ss. Having the focal region and/or irradiance peak of the probe coincide with the surface Ss of the substrate S, may cause the light to be reflected from the surface Ss at the position where the beam has the smallest diameter, which may optimize lateral resolution.

In one embodiment, the focal region Lf of the photonic jet Lj of probe light Lpr coincides with a surface Ss of the substrate S. For example, the focal region is defined as the region where the D86 diameter of the focused beam is within a factor two of the minimum D86 diameter. In another or further embodiment, an irradiance peak of the photonic jet Lj of probe light Lpr coincides with a surface Ss of the substrate S. In another or further embodiment, the focal distance of the probe light is selected to have the waist (e.g. at the irradiance peak) of the focal region Fr coincide with the surface Ss of the substrate S, at least within a margin of ±1µm, preferably within a margin ±500nm, more preferably within a margin ±250nm, more preferably within a margin ±100nm, most preferably within a margin ±50nm, or as small a margin as possible.

In other or further embodiments, at least some or even most of the reflected light is received from deeper regions. Accordingly, the focal region Lf may also be set to coincide a region deeper within the substrate S. So it will be understood that the probe region Spr may be restricted to the surface Ss of the substrate S and/or include deeper regions. In one embodiment, the substrate S comprises a top layer with transducing material (not shown here) which may allow probe light Lpr to be reflected deeper inside the substrate S and/or allow pump light Lpu to be absorbed deeper inside the substrate S.

In some embodiments, a source beam of probe light Lpr is directed through the microlens 11 and reflected back from a surface Ss of the substrate S, wherein acoustic waves W scattering from the subsurface features Sf (which not shown here), cause modulation Sm (e.g. of the height) of the surface Ss, wherein the modulation Sm of the surface Ss causes modulation Lm of the probe light Lpr reflected back from a surface Ss (e.g. modulation of the phase), wherein the subsurface features Sf are imaged based on the modulation Lm of the probe light Lpr.

In some embodiments, a respective wavelength λ of the pump and probe light is tuned to determine a respective focus distance and/or position of the focus with respect to the surface Ss, which may be the same or different. This can be particularly useful while using the same microlens 11 for focusing both the probe light Lpr and pump light Lpu. In other or further embodiments (not shown), the beams may be pre-focused before the microlens 11 with a different angle of convergence. In other or further embodiments (not shown), different microlenses and/or separate heads 10 can be used for focusing the probe light Lpr and pump light Lpu. In one embodiment (not shown), the pump light Lpu is focused deeper into the substrate S than the probe light Lpr. This may help to more effectively generate acoustic waves.

FIGs 3A-3F illustrate various probe heads 10 configured to illuminate a microlens 11. In a preferred embodiment, e.g. as shown in FIGs 3A-3E, the microlens 11 is held by the probe head 10. This allows to laterally scan the photonic jet Lj over the substrate surface. Alternatively, e.g. as shown in FIG 3F, one or more microlenses 11 can be disposed on the substrate S, optionally in a fluid medium M. In some embodiments, the microlens 11 is attached to a (transparent) bottom side of the probe head 10. To improve the connection, the microlens 11 may be partially or completely embedded, e.g. in adhesive material 11a attached to the bottom side of the probe head. For example, an adhesive material 11a, such as PDMS, may be spin coated onto a transparent bottom side of the probe head 10.

In some embodiments, e.g. as shown in FIGs 3A and 3C, the microlens 11 is attached to a transparent window 12w. In other or further embodiments, e.g. as shown in FIGs 3B-3D, and 3F, the probe head 10 comprises pre-focusing optics 12f, configured to focus a beam of light onto the microlens 11. For example, the probe light is focused onto the substrate S via a combination of an objective (microscope) lens and the microlens 11. In other or further embodiments, e.g. as shown in FIGs 3B and 3D, the microlens 11 is directly attached to the pre-focusing optics 12f (e.g. microscope objective). In other or further embodiments, e.g. as shown in FIG 3C or 3F, the pre-focusing optics 12f are arranged at a distance from the microlens 11. Typically, the more convergent the pre-focused beam, the closer may be the irradiance peak of the photonic jet Lj to the microlens 11, which may be undesirable in some embodiments.

In one embodiment, e.g. as shown in FIG 3E, the microlens 11 is attached to at the end of an optical fiber 12g. This way, a small spot of light can be easily directed into the microlens 11. In another or further embodiment, the one or more optical fibers or other light collecting means 12r are arranged adjacent and/or around the microlens 11. For example, a double clad fiber can be used. In some embodiments, the light collecting means may help to collect more of the reflected light not passing through the microlens 11. Also other or further light collecting means can be used. In some embodiments, the pre-focusing 12f have a relatively large diameter compared to the microlens 11 allowing also reflected light passing adjacent the microlens 11 to be collected. It is noted that this need not affect the resolution determined by the extent of overlap between the photonic jet and the probe region.

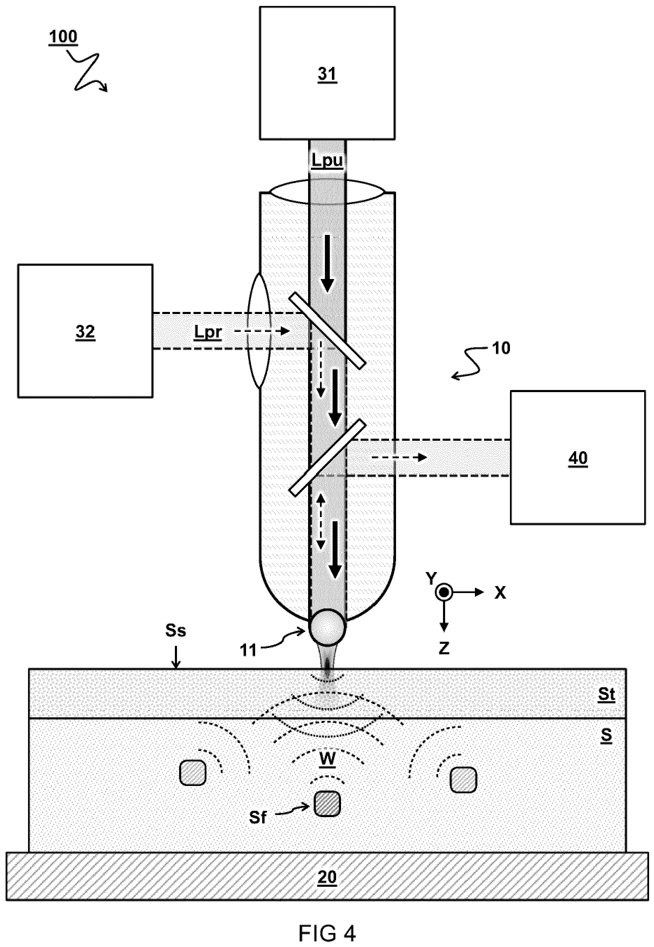

FIG 4 illustrates further parts of a system 100 for imaging subsurface features Sf. In some embodiments, the system 100 comprises a probe head 10 configured to hold the microlens 11. In one embodiment, the system 100 comprises a light source 31 configured to generate pump light Lpu. In another or further embodiment, the system 100 comprises a light source 32 configured to generate pump light Lpu. The light sources 31,32 can be the same or different light sources. The wavelength of the pump light Lpu and probe light Lpr can be the same or different. In another or further embodiment, the system 100 comprises a sensor arrangement 40 configured to measure the probe light Lpr after interaction with the substrate S. When using the same wavelengths, reflected probe light Lpr can be directed to the sensor arrangement 40, e.g. by a semi-reflective mirror and/or using a polarization dependent mirror. When using different wavelengths, stray pump light Lpu can be more easily filtered from the reflected probe light Lpr. In some embodiments, the system 100 comprises a substrate stage 20, e.g. configured to hold and/or move the substrate S. In one embodiment, e.g. as shown, the same probe head 10 is configured to deliver both pump light Lpu and probe light Lpr through the same microlens 11. In another or further embodiment (not shown), a single probe head 10 comprises different microlenses 11 e.g. arranged adjacent each other to respectively deliver the pump light Lpu and probe light Lpr.

In some embodiments, the system 100 comprises a controller (not shown) programmed and/or otherwise configured to perform operational acts as described herein. For example, the controller comprises or accesses a non-transitory computer-readable medium storing instructions that, when executed by one or more processors of the system 100, cause the system 100 to perform any of the methods as described herein. In other or further embodiments, the system 100 is configured to perform a method for imaging subsurface features Sf below a surface Ss of a substrate S. In one embodiment, the controller is configured to generate acoustic waves W scattering from the subsurface features Sf inside the substrate S, e.g. by controlling the pump light source 31 and/or probe head 10. In another or further embodiment, the system 100 is configured to provide a beam of probe light Lpr interacting with a probe region of the substrate S traversed by the acoustic waves W scattering from the subsurface features Sf, e.g. by controlling the probe light source 32 and/or probe head 10. In another or further embodiment, the system 100 is configured to image the subsurface features Sf based on a modulation Lm of the probe light Lpr caused by the interaction with the acoustic waves W in the probe region Spr, e.g. by processing data from the sensor arrangement 40. In another or further embodiment, the system 100 is configured to focus the probe light Lpr onto the substrate S via a microlens 11 generating a photonic jet Lj with a focal region Lf coinciding with the probe region Spr, e.g. by controlling a distance between the microlens 11 and the surface Ss of the substrate S and/or a lateral position over the surface Ss.

In some embodiments, the substrate S comprises a transducer material St configured to facilitate generation and/or probing of acoustic waves. For example, the transducer material has a relatively high heat expansion coefficient, so that when heat is generated by absorption of a pulse of the pump light Lpu, the material rapidly expands causing significant generation of acoustic waves. For example, the transducer material has a relatively high acoustic deformation potential, so that acoustic waves may cause relatively high deformation resulting in significant modulation of the probe light Lpr.

In some embodiments, the entire substrate S is made of the transducer material St In other or further embodiments, the substrate S having the subsurface features Sf to be imaged comprises other or further materials. In one embodiment, the transducer material St is an integral part of the substrate S. In another or further embodiment, a layer of the transducer material St is deposited onto the substrate S before measuring the subsurface features Sf. As described herein, such deposited layer is considered part of the substrate. For example, where reference is made to a surface Ss of the substrate S, this may refer to a surface of the transducer material St. For example, the pump light Lpu and/or probe light Lpr may exclusively or predominantly interact with the transducer material St where the acoustic waves W travel between the transducer material St and the rest of the substrate S (where the subsurface features Sf to be imaged are arranged). In one embodiment, the transducer material St is removed from the substrate S after measuring the subsurface features Sf. In another embodiment, the transducer material St is maintained as part of the substrate S.

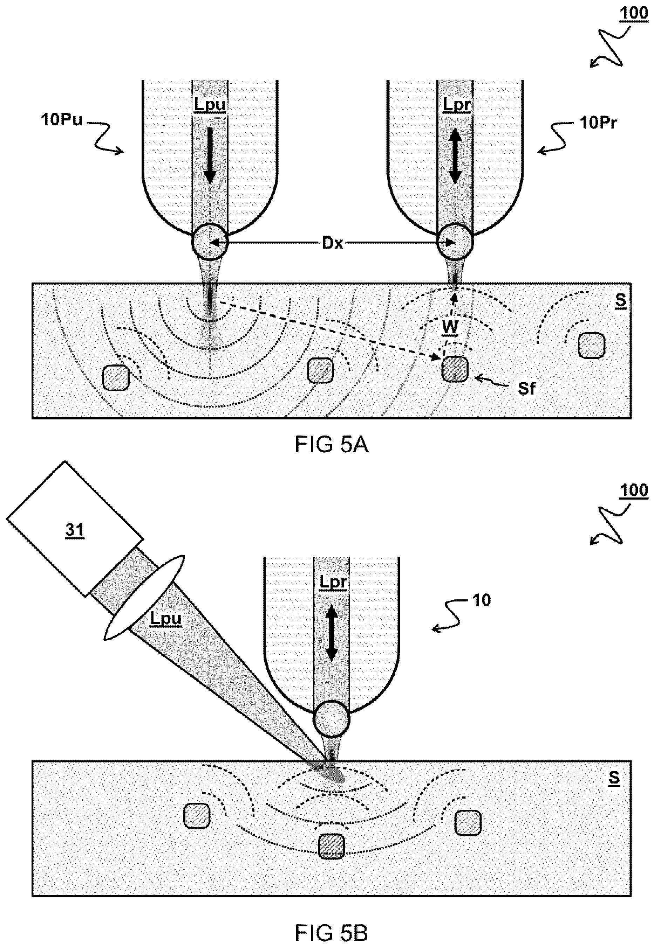

FIG 5A illustrates a system 100 comprising separate pump and probe heads 10Pu, 10Pr. In one embodiment, acoustic waves are injected into the substrate S at a first location by the pump head 10Pu, and measured (after scattering from the subsurface features Sf) by a separate probe head 10Pr at a second location at a lateral distance Dx from the first location. To receive sufficient signal, the distance Dx is preferably not too large, e.g. less than ten centimeter, more preferably less than five centimeter, more preferably less than one centimeter, more preferably less than half a centimeter, more preferably less than one millimeter, more preferably less than one hundred micrometer, e.g. down to one micrometer, or less. In some embodiments, the distance Dx is varied between measurements and/or the radial position is varied (e.g. the pump head arranged at rotated positions around the probe head). This may help to obtain further information of the subsurface features Sf, e.g. using acoustic waves W traveling varying paths.

Preferably, each of the pump and probe heads 10Pu, 10Pr comprises a respective microlens configured to generate a respective photonic jet. In this way both the position of the acoustic wave origin and measurement position can be well defined with high resolution. Alternatively, FIG 5B illustrates a system 100 comprising wherein a regular focused light beam is used to generate acoustic waves. For example, pump light Lpu from a pump light source 31 is focused by a regular lens, e.g. at a far-field distance. Preferably, the focus of the pump light Lpu coincides on the substrate S with the photonic jet of probe light Lpr, or is at a relatively close distance Dx as described with reference to FIG 5A.

In some embodiments, e.g. as shown, the system 100 comprises separate pump and probe heads 10Pu, 10Pr arranged at the same side of a substrate S, e.g. configured to pump and probe the same surface or interface. In other or further embodiments (not shown), one or more pump and/or probe heads 10Pu, 10Pr may be arranged on different, e.g. opposite, sides of a substrate. For example, acoustic waves generated by a pump beam on one side of the substrate may travel through the substrate to be measured by a probe beam on another, e.g. opposite, side of the substrate.

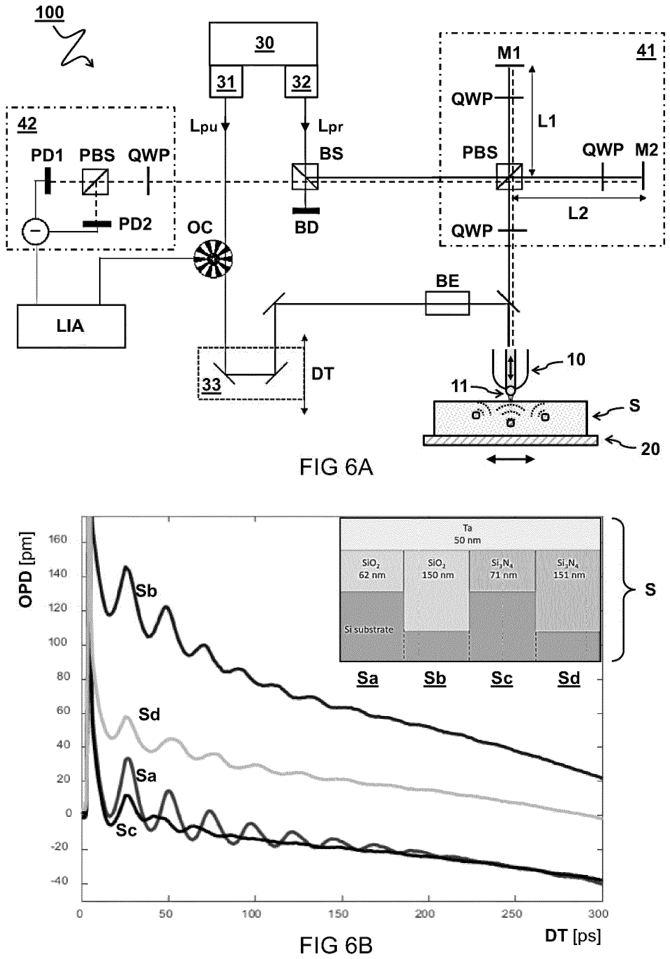

FIG 6A illustrates further details of a system 100 to generate and measure light interacting with a substrate S. For example, the figure illustrates a beam splitter (BS), polarizing beam splitters (PBS), quarter wave plates (QWP), mirrors (M1,M2), a beam dump (BD), a beam expander (BE), an optical chopper (OC), photodiodes (PD1,PD2), a lock-in amplifier (LIA), et cetera.

In one embodiment, the system 100 comprises an interferometer 41 arranged in a light path between the probe light source 32 and the microlens 11 and/or arranged in a light path between the microlens 11 and one or more light sensors 42. Typically, an interferometer operates by splitting and recombining light into different paths, e.g. having the same length L1,L2. Light along one of the paths may be affected by interaction with the substrate S causing constructive or destructive interference with respect to the other path. For example, the interferometer 41 comprises a polarizing beam splitter (PBS), mirrors (M1,M2), and quarter wave plates (QWP). For example, the light is measured using one or more photodiodes (PD1,PD2)

In another or further embodiment, the system comprises an optical chopper (OC) and/or lock-in amplifier (LIA) which may improve signal, e.g. by distinguishing between measurements including and excluding the pump interacting with the substrate S. In another or further embodiment, the system comprises at least one light source 30. In one embodiment, e.g. as shown, light from the laser may be converted into a desired power and/or wavelength using intermediate optics 31,32. In another or further embodiment, the system comprises a delay stage 33, configured to set a relative time delay DT between a respective pulse of pump light Lpu generating acoustic waves in the substrate S, and (subsequent) pulse of probe light Lpr measuring acoustic waves in the substrate S.

FIG 6B illustrates example results of an optical path length difference (OPD) as function of time delay (DT) between pump and probe pulses for different positions Sa,Sb,Sc,Sd on the substrate S as shown. In some systems, a bandwidth of the optical detector may be limited. This is may be a problem because the opto-acoustic pulses can be extremely broadband in nature and aliasing may occur. In one embodiment, this issue may be alleviated by constructing a construct high frequency trace (e.g. 200 GHz sample frequency) using a set of sub-traces. For example, a first subtrace of samples is recorded at lower sample frequency (e.g. 20 GHz). For example, a second subtrace is recorded (e.g. also at 20 GHz) but with a time shift (e.g. 5 ps time shift corresponding to 1/200 GHz) relative to excitation pulse trigger. For example, a third subtrace is recorded (e.g. also at 20 GHz) but with another time shift (e.g. 10 ps time shift corresponding to 2/200 GHz) relative to excitation pulse trigger. This can be repeated, as necessary, e.g. up to a subtrace N recording at 20 GHz sample frequency with 45 ps time shift 19/200 GHz relative to excitation pulse trigger.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

## Claims

1. A method for imaging subsurface features (Sf) below a surface (Ss) of a substrate (S), the method comprising
generating acoustic waves (W) scattering from the subsurface features (Sf) inside the substrate (S);
providing a beam of probe light (Lpr) interacting with a probe region (Spr) of the substrate (S) traversed by the acoustic waves (W) scattering from the subsurface features (Sf); and
imaging the subsurface features (Sf) based on a modulation (Lm) of the probe light (Lpr) caused by the interaction with the acoustic waves (W) in the probe region (Spr);
wherein the probe light (Lpr) is focused onto the substrate (S) via a microlens (11) generating a photonic jet (Lj) with a focal region (Lf) coinciding with the probe region (Spr).

2. The method according to any of the preceding claims, wherein the beam of probe light (Lpr) is at least partially reflected from the probe region (Spr) back through the microlens (11) for measurement.

3. The method according to any of the preceding claims, wherein a source beam of probe light (Lpr) is directed through the microlens (11) and reflected back from a surface (Ss) of the substrate (S), wherein acoustic waves (W) scattering from the subsurface features (Sf) cause modulation (Sm) of the surface (Ss), wherein the modulation (Sm) of the surface (Ss) causes modulation (Lm) of the probe light (Lpr) reflected back from a surface (Ss), wherein the subsurface features (Sf) are imaged based on the modulation (Lm) of the probe light (Lpr).

4. The method according to any of the preceding claims, wherein the modulation of the probe light (Lpr) comprises modulation of a phase of the probe light (Lpr), wherein the modulation (Lm) of the probe light (Lpr) is measured interferometrically.

5. The method according to any of the preceding claims, wherein the acoustic waves (W) are generated by a beam of pump light (Lpu) interacting with a pump region (Spu) of the substrate (S).

6. The method according to the preceding claim, wherein the pump light (Lpu) is focused onto the substrate (S) via a microlens (11) generating a photonic jet (Lj) with a focal region (Fr) determining the pump region (Spu).

7. The method according to the preceding claim, wherein the pump light (Lpu) is focused onto the substrate (S) via the same microlens (11) as the probe light (Lpr).

8. The method according to any of the three preceding claims, wherein a wavelength of the probe light (Lpr) is lower than a wavelength of the pump light (Lpu).

9. The method according to any of the preceding claims, wherein the microlens (11) is a spheroidal microlens formed of a dielectric material, wherein a refractive index and diameter of the microlens (11) are selected to achieve a D86 width in a focal region (Fr) of the photonic jet (Lj ) less than half a wavelength (λ) of the respective light (Lpr,Lpu) used.

10. The method according to any of the preceding claims, wherein the microlens (11) has a cross-section diameter (Da,Dr) between one and twenty-five times a wavelength (λ) of the respective light (Lpr,Lpu).

11. The method according to any of the preceding claims, wherein a wavelength (λ) of the respective light (Lpr,Lpu), a relative refractive index (np) of the microlens (11), and a diameter (Da,Dr) of the microlens (11) are selected to set a focal distance, between a front of the microlens (11) and an irradiance peak of the photonic jet (Lj) of at least one micrometer.

12. The method according to any of the preceding claims, wherein the focal region (Lf) of the photonic jet (Lj) of probe light (Lpr) coincides with a surface (Ss) of the substrate (S).

13. The method according to any of the preceding claims, wherein the microlens (11) is held by a probe head (10) at a distance above the surface (Ss) of the substrate (S), wherein the substrate (S) is held by a substrate stage (20), wherein the probe head (10) and/or substrate stage (20) are configured to control a relative position (X,Y,Z) of the microlens (11) with respect to a position of the surface (Ss) of the substrate (S), wherein the subsurface features (Sf) are imaged by scanning the probe head (10) over the surface (Ss).

14. The method according to any of the preceding claims, wherein the probe light (Lpr) and/or pump light (Lpu) are generated as pulses having a pulse length less than one nanosecond, wherein a delay stage (33) is configured to set a relative time delay (DT) between a respective pulse of pump light (Lpu) generating acoustic waves in the substrate (S), and a pulse of probe light (Lpr) measuring acoustic waves in the substrate (S), wherein a set of measurements is performed using different time delay (DT) between respective pulses of probe light (Lpr) and pump light (Lpu).

15. A system (100) configured to perform the method according to any of the preceding claims, the system comprising
means for generating acoustic waves (W) scattering from the subsurface features (Sf) inside the substrate (S);
means for providing a beam of probe light (Lpr) interacting with a probe region (Spr) of the substrate (S) traversed by the acoustic waves (W) scattering from the subsurface features (Sf); and
means for imaging the subsurface features (Sf) based on a modulation (Lm) of the probe light (Lpr) caused by the interaction with the acoustic waves (W) in the probe region (Spr);
wherein the probe light (Lpr) is focused onto the substrate (S) via a microlens (11) generating a photonic jet (Lj) with a focal region (Lf) coinciding with the probe region (Spr).
